# EUROPÄISCHE PATENTANMELDUNG

(11) **EP 4 302 972 A1**
(43) Veröffentlichungstag der Anmeldung: **10.01.2024**
(21) Anmeldenummer: 22183714.9
(22) Anmeldetag: 08.07.2022
(51) Int. Cl.: B29C 65/14, B29C 65/78

(54) **ZONENBASIERTES HEIZELEMENT**

(71) Anmelder: Georg Fischer Rohrleitungssysteme AG, 8201 Schaffhausen (CH)
(72) Erfinder: Roesch, Juergen, 79853 Lenzkirch (DE); Engesser, Benedikt, 78166 Donaueschingen (DE)
(74) Vertreter: Fenner, Seraina

(57) **Zusammenfassung**

Heizelement (1) zur Erzeugung von IR-Wärmestrahlen zum berührungslosen Erwärmen von Kunststoffprofilenden, vorzugsweise zum stirnseitigen Verschweissen von in einer Vorrichtung eingespannten Rohren oder Fittings, beinhaltend, eine zumindest teilweise aus einem leitfähigen Material hergestellte, zwei heizbare Stirnseiten (5) aufweisende Heizplatte (2), einen Heizdraht (3) zum Erzeugen der Wärmestrahlen, wobei der Heizdraht (3) an den Stirnseiten (5) der Heizplatte (2) angeordnet ist, wobei die Heizplatte (2) mehrere voneinander radial beabstandete Heizzonen (12) aufweist.

## Beschreibung

Die Erfindung betrifft ein Heizelement zur Erzeugung von IR-Wärmestrahlen zum berührungslosen Erwärmen von Kunststoffprofilenden, vorzugsweise zum stirnseitigen Verschweissen von in einer Vorrichtung eingespannten Rohren oder Fittings, beinhaltend, eine zumindest teilweise aus einem leitfähigen Material hergestellte, zwei heizbare Stirnseiten aufweisende Heizplatte, einen Heizdraht zum Erzeugen der Wärmestrahlen, wobei der Heizdraht an den Stirnseiten der Heizplatte angeordnet ist.

Heizelemente zum Verschweissen von Kunststoffprofilen, wobei die Erwärmung der Kunststoffprofilenden berührungslos erfolgt, sind aus dem Stand der Technik bekannt und werden oft in chemischen wie auch in high-purity Bereichen angewandt, da dort eine hohe Anforderung an die Reinheit der Verbindung der Rohre gestellt wird. Solche Heizelemente weisen meist Heizpatronen auf, die in Bohrungen, welche über den Umfang ins Zentrum der Heizplatte ragen, angeordnet sind. Über diese Heizpatronen wird dann die komplette Heizplatte erwärmt. Dies hat einerseits den Nachteil, dass die Heizplatte keine homogene Temperatur aufweist, sondern im Bereich der Heizpatronen wärmer ist und in den weiter entfernten Bereichen tiefere Temperaturen aufweist. Und andererseits kann die Temperatur auch nicht individuell in bestimmten Bereichen geregelt werden. Zudem hat sich gezeigt, dass während der Erwärmung eines Rohrendes Hitzestau im oberen inneren Bereich des Rohres auftritt, was zu einer ungleichmässigen Erwärmung führt und dadurch keine konstante, gleichmässige Schweissnaht erzielt wird. Dieser Hitzestau wird vor allem auch dadurch erzeugt, dass im inneren Bereich der Rohrleitung wo keine Erwärmung der Heizplatte nötig wäre, eine starke Erwärmung aufgrund der Anhörung der Heizpatronen vorliegt.

Die US 2007/0262075 A1 offenbart eine Heizplatte für doppelwandige Rohre bei der die jeweilige Stirnseite eines Rohres in einer Nut angeordnet wird, wobei direkt unter der Nut bzw. in der Heizplatte der Heizdraht entlang der Kontur des Rohres bzw. der Nut in der Heizplatte verläuft, wodurch erzielt wird, dass die Wärmequelle auch gleich bei der Rohrwandstärke angeordnet ist. Nachteilig hierbei ist, dass man für unterschiedliche Rohrdurchmesser auch immer unterschiedliche Heizplatten verwenden muss.

Es ist Aufgabe der Erfindung ein Heizelement zum Erzeugen von IR-Wärmestrahlen zur berührungslosen Erwärmung vorzuschlagen, das sich für unterschiedliche Rohrdurchmesser eignet und eine homogene Erwärmung ermöglicht, sowie energiesparend ist.

Diese Aufgabe wird erfindungsgemäss dadurch gelöst, dass die Heizplatte mehrere voneinander radial beabstandete Heizzonen aufweist.

Das erfindungsgemässe Heizelement zur Erzeugung von IR-Wärmestrahlen dient dem berührungslosen Erwärmen von Kunststoffprofilenden, vorzugsweise Rohrenden oder Fittingsenden, die in einer Vorrichtung zum stirnseitigen Verschweissen eingespannt sind. Das Heizelement ist vorzugsweise in einer Vorrichtung zum stirnseitigen Verschweissen angeordnet oder kann nachträglich in eine solche eingebaut werden wie auch einen herkömmlichen Schweissspiegel ersetzen. Das erfindungsgemässe Heizelement beinhaltend, eine zumindest teilweise aus einem leitfähigen Material hergestellte, zwei gegenüberliegende, voneinander abgewandte, heizbare Stirnseiten aufweisende Heizplatte. Die beiden beheizbaren Stirnseiten dienen dem gleichzeitigen Erwärmen der gegenüberliegenden Rohrenden, welche nach dem Erwärmen durch das Heizelement zusammengefügt werden. Das Heizelement beinhaltet einen Heizdraht zum Erzeugen der IR-Wärmestrahlen, wobei der Heizdraht an den Stirnseiten der Heizplatte angeordnet ist. Um eine optimale Wärmeverteilung zu erzielen, weist die Heizplatte mehrere voneinander radial beabstandete Heizzonen auf. Die Heizzonen sind selektiv bzw. wahlweise unabhängig voneinander heizbar. Das heisst, dass beispielsweise die innerste Heizzone beheizt wird und die äussere Heizzone nicht, da ein kleiner Rohrdurchmesser verschweisst wird.

Die Heizzonen weisen vorzugsweise untereinander keine Wärmeleitung auf.

Vorzugsweise ist jede Heizzone gegenüber der nächstliegend angeordneten Heizzone isoliert. Dies verringert einen ungewollten Wärmeabfluss auf die danebenliegenden Heizzonen, die dann meist nicht erwärmt sind, da nur die Heizzone beheizt wird, die dem Rohrdurchmesser entspricht.

Es ist vorteilhaft wenn das Heizelement mindestens zwei Heizzonen aufweist. Aufgrund des Sortiments an Rohrleitungsdurchmessern hat sich gezeigt, dass drei bis sechs Heizzonen an einem Heizelement zu bevorzugen sind.

Als vorteilhafte Ausführungsform hat sich gezeigt, wenn die Heizplatte aus mehreren voneinander radial beabstandeten Heizringe gebildet ist. Dadurch ist die Heizplatte modular aufgebaut und so können die einzelnen Heizringe individuell geregelt werden.

Als bevorzugte Ausführungsform hat sich gezeigt, wenn zwischen den Heizringen ein Isolationsspalt angeordnet ist, der die Wärmeübertragung unter den einzelnen Heizringen reduziert. Dadurch, dass jeweils zwischen den Heizringen ein Spalt vorhanden ist und die Heizringe nirgends aneinander anliegen bzw. miteinander in Berührung kommen, wird die Wärme der einzelnen Heizringe nicht über eine Wärmeleitung an den nächstliegenden Heizring übertragen, sondern dazwischen befindet sich der Spalt und die Wärme wird ausschliesslich über die Konvektion übertragen was somit eine sehr geringe Wärmeübertragung darstellt.

Vorzugsweise verläuft der Heizdraht an den Stirnseiten der Heizringe spiralförmig um das Zentrum der Heizplatte. Der Aufbau der Heizplatte ist vorzugsweise entsprechend konzentrisch bzw. die Heizringe sind zueinander konzentrisch angeordnet und bilden die Heizplatte. Als vorteilhafte Ausführungsform hat sich gezeigt, wenn der spiralförmig verlaufende Heizdraht am jeweiligen Heizring die Heizzone bildet.

Es ist vorteilhaft, wenn zur radialen Beabstandung der Heizringe zwischen den Heizringen ein Distanzelement angeordnet ist. Dadurch kann zwischen den Heizringen ein Abstand generiert werden, so dass die einzelnen Heizringe, welche aus einem leitenden Werkstoff vorzugsweise Aluminium sind, die Wärme nicht durch Wärmeleitung übertragen.

Als bevorzugte Ausführungsform hat sich gezeigt, wenn das Distanzelement aus einem isolierenden Werkstoff besteht, beispielsweise einem keramischen Werkstoff. Dadurch sind die einzelnen Heizringe gegenüber einander isoliert angeordnet.

Vorzugsweise ist das Distanzelement als Halbschale ausgebildet ist. Dies ermöglicht eine einfache Montage der Heizplatte. Die Heizringe sind vorzugsweise einteilig ausgebildet und möglichst dünnwandig herzustellen, damit die Energie zur Erwärmung des Rohres nicht vom Material des Heizrings absorbiert wird, sondern in das zu erwärmende Rohr fliesst. Deshalb haben die Heizringe einen U-förmigen Querschnitt bzw. weisen in der Mitte des Querschnitts eine rundum verlaufende Vertiefung auf in der das Distanzelement angeordnet ist. Damit es dort einlegbar ist, ist das Distanzelement als Halbschale ausgebildet.

Vorteilhaft ist es, wenn die Heizplatte von einem Rahmen umfasst ist. Der Rahmen dient der Heizplatte als Aufnahme bzw. Halterung.

Aufgrund des Aufbaus der Heizplatte sind vorzugsweise die Heizringe und die Distanzelemente konzentrisch zueinander angeordnet. Zudem ist es auch vorteilhaft, wenn die axiale Mitte der Distanzelemente und Heizringe in einer Ebene liegen.

Da der Heizdraht auf der Stirnseite der Heizplatte angeordnet ist und vorzugsweise in einer Nut verläuft ist es vorteilhaft, wenn an den Stirnseiten eine Abdeckung angeordnet ist, um den Heizdraht abzudecken, so ist der Heizdraht geschützt. Zudem ist es vorteilhaft, wenn jeder Heizringe bzw. die Stirnflächen der Heizringe eine separate Abdeckung aufweisen, da dadurch eine Wärmeübertragung der einzelnen Heizringe aufgrund Wärmeleitung vermieden werden kann, da auch dort keine Kontaktfläche zwischen den Abdeckungen der Heizringe gebildet wird.

Als bevorzugt hat sich gezeigt, wenn der Heizringe und die Distanzelemente durch Zusammenspannen in einem Rahmen fixiert sind. Dies ermöglicht eine genaue Justierung und Zentrierung der einzelnen Komponenten zueinander.

Vorzugsweise sind zur Fixierung und Zentrierung der Heizplatte Zentrierelemente im Rahmen angeordnet, die auf den Aussenumfang der Heizplatte drücken.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht eines erfindungsgemässen Heizelements, ohne Abdeckungen,
- Fig. 2: eine Schnittansicht durch ein erfindungsgemässes Heizelement mit den stirnseitigen Abdeckungen,
- Fig. 3: einen Längsschnitt durch ein erfindungsgemässes Heizelement und
- Fig. 4: eine Vorrichtung zum Erwärmen von Kunststoffrohrenden mit einem eingebauten, erfindungsgemässen Heizelement.

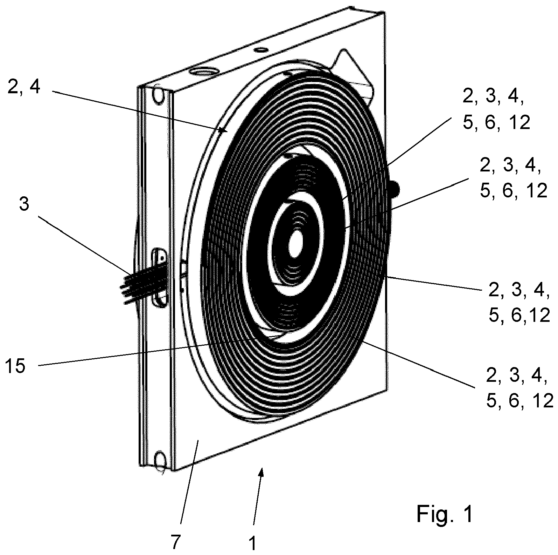

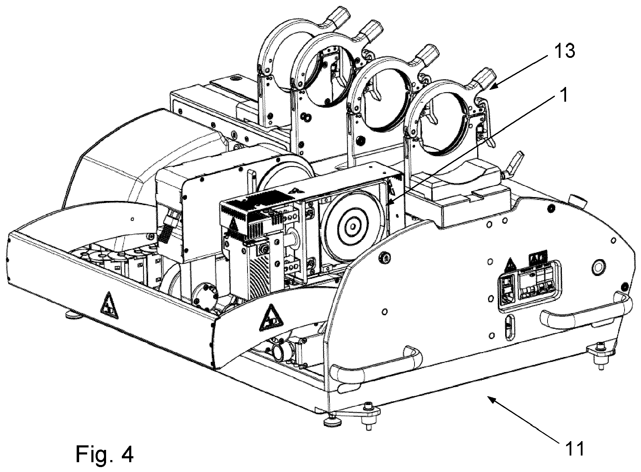

Die in Fig. 1 dargestellte Zeichnung zeigt eine dreidimensionale Ansicht eines erfindungsgemässen Heizelements 1. Das Heizelement 1 ist als Infrarot Heizelement 1 ausgebildet und dient dem berührungslosen Verschweissen von Kunststoffprofilen, vorzugsweise Rohrenden wie auch Fittingsenden. Das Heizelement 1 ist vorzugsweis in einer Vorrichtung 11 zum Verschweissen von Rohrenden angeordnet, in der die zu verschweissenden Enden, sich gegenüberliegend in einer Spannvorrichtung 13 eingespannt sind. Das Heizelement 1 ist zwischen die Rohrenden verschieb- oder schwenkbar, diese Anordnung in der Vorrichtung 11 ist in Fig. 4 ersichtlich. Das erfindungsgemässe Heizelement 1 beinhaltet eine Heizplatte 2, wobei die Heizplatte 2 zwei heizbare, sich gegenüberliegende, voneinander abgewandte Stirnseiten 5 aufweist. An den Stirnseiten 5 der Heizplatte 2 ist ein Heizdraht 3 angeordnet, der vorzugsweise spiralförmig um das Zentrum der Heizplatte 2 verläuft. Die erfindungsgemässe Heizplatte 2 weist mehrere Heizzonen 12 auf die voneinander radial beabstandet sind, dies ist durch den rundum verlaufenden Isolationspalt 15 zwischen den einzelnen Heizzonen 12 erkennbar. Die in Fig. 1 dargestellte Heizplatte 2 des Heizelements 1 weist drei Heizzonen 12 auf, wobei die Heizplatte 2 vorzugsweise mindestens zwei Heizzonen, speziell bevorzugt zwischen zwei und sechs Heizzonen 12 aufweist. Die Beabstandung der einzelnen Heizzonen 12 zueinander mittels des Isolationsspalts 15 mittels wird deshalb umgesetzt, dass die Wärme nicht an die anderen Heizzonen 12 abgeleitet wird. Wird beispielsweise ein Rohrende verschweisst, das einen Durchmesser aufweist, welches mit der mittleren Heizzone 12 verschweisst wird, werden die beiden danebenliegenden Heizzonen 12 nicht aktiviert. Dadurch kann einerseits Energie eingespart, wie auch ein Hitzestau im Inneren des Rohres vermieden werden, da nur die Heizzone 12 erwärmt wird, die dem Rohrdurchmesser zugeordnet ist.

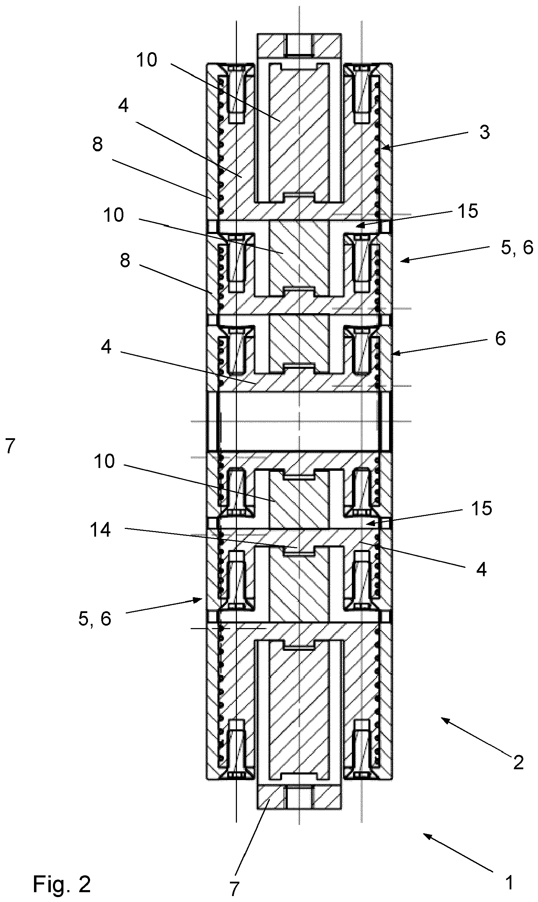

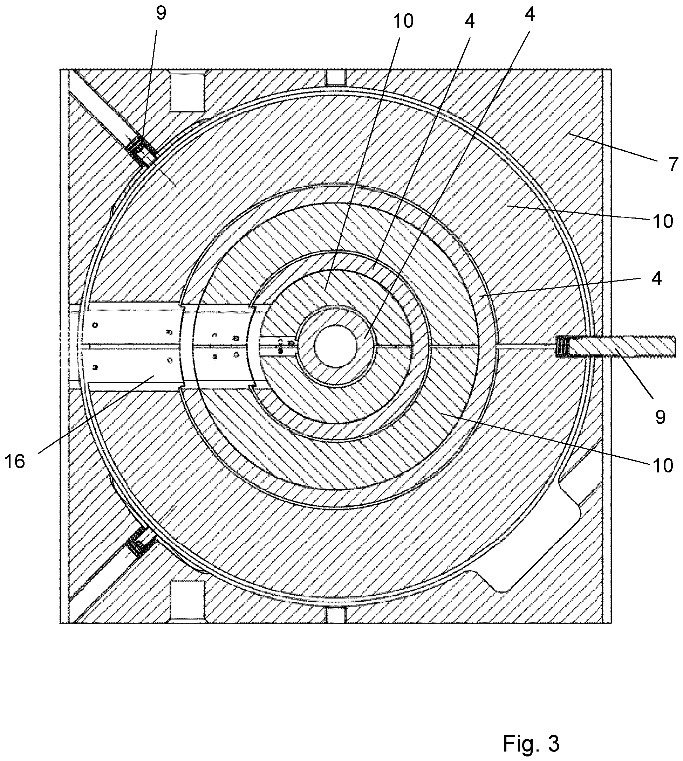

Fig. 2 zeigt den Aufbau einer erfindungsgemässen Heizplatte 2. Die Heizplatte 2 weist vorzugsweise Heizringe 4 auf, wobei diese voneinander radial beabstandet sind. An den Stirnseiten 6 der einzelnen Heizringe 4 ist der Heizdraht 3 angeordnet und verläuft vorzugsweise spiralförmig, vorzugsweise in einer dafür vorgesehenen Nut. Der Querschnitt eines Heizrings 4 ist vorzugsweise als U-Form ausgebildet, wodurch die Wandstärke reduziert ist und dadurch die Wärme nur geringfügig vom leitfähigen Material des Heizrings 4 absorbiert und dadurch möglichst viel von der Wärme an die zu verschweissenden Rohrenden übertragen wird. In der Mitte des U-förmigen Querschnitts des Heizrings 4 ist ein Distanzelement 9 angeordnet. Über das Distanzelement 10 sind die Heizringe 4 miteinander verbunden. Das Distanzelement 10 ist aus einem isolierten Werkstoff, wodurch eine Wärmeübertragung der einzelnen Heizringe 4 untereinander vermieden bzw. reduziert wird. Um die Distanzelemente 10 möglichst einfach zwischen den Heizringen 4 zu befestigen, sind die Distanzelemente 10 als Halbschalen ausgebildet, was gut in Fig. 3 ersichtlich ist. So sind die halbschalenförmigen Distanzringe 10 einfach um den geringeren Aussendurchmesser des Heizrings 4 adaptierbar. Am Aussendurchmesser des Distanzelements 10 ist dann ein weiterer Heizring 4 angeordnet und an dessen geringeren Aussendurchmesser ist dann wiederum ein Distanzelement angeordnet. Die Heizplatte 2 ist aus so vielen Heizringen und Distanzelementen gebildet, dass möglichst alle Durchmessergrössen der zu verschweissenden Rohre abgedeckt werden können. Selbstverständlich ist auch ein anderer Aufbau einer Heizplatte denkbar um die radial voneinander beabstandeten Heizzonen 12 umzusetzen.

Als vorteilhaft hat sich auch gezeigt, wenn die Heizringe 4 und Distanzelemente 10 zueinander axial zentriert 14 sind. Dies wird in Fig. 2 über einen Absatz am Heizring 4 und eine Vertiefung im Distanzelement 10 gelöst, es gibt hier aber auch noch viele andere Lösungen wie mit Distanzbüchsen oder sonstigen Anschlägen um dies zu erzielen. Damit die Breite der Heizplatte 2 möglichst überall identisch ist bzw. kein Versatz bei den Heizringen 4 entsteht und plane Stirnseiten 5 der Heizplatte 2 gegeben sind, liegt die axiale Mitte der Heizringe und Distanzelemente 10 alle in derselben Ebene.

In Fig. 2 sind die Abdeckungen 8 der Stirnseiten 6 der Heizringe 4 ersichtlich. Diese dienen dem Schutz des Heizdrahts 3 und vermeiden ein ungewolltes Abstehen des Heizdrahts 3. Es ist vorteilhaft, wenn jeder Heizring 4 eine separate Abdeckung 8 aufweist, um auch dort wieder die Wärmeübertragung auf die anderen Heizringe 4 möglichst zu reduzieren. Zwischen den einzelnen Heizringen 4 liegt dementsprechend ein Isolationsspalt 15 vor, wodurch kein Heizring 4 einen anderen Heizring 4 direkt kontaktiert.

Als bevorzugte Ausführungsform hat sich gezeigt, wenn die Heizplatte 2 in einem Rahmen 7 angeordnet ist, was gut in Fig. 3 erkennbar ist. Die konzentrische Anordnung der Heizringe 4 und der Distanzelemente 10 ermöglicht ein gegenseitiges Verspannen der Komponenten miteinander im Rahmen 7. Vorzugsweise weisen die Heizringe 4 eine Aussparung zur Drahtdurchführung 16 auf. Mittels Zentrierelemente 9 wird die Heizplatte 2 im Rahmen 7 zentriert und die Heizringe 4 und Distanzelemente 10 gleichzeitig zusammengespannt. Es ist vorteilhaft, wenn die Zentrierelemente 9 an drei Punkten am Aussendurchmesser der Heizplatte angeordnet sind und mit dem Rahmen 7 verbunden sind. Vorzugsweise sind die Zentrierelemente 9 als Stifte ausgebildet, die zudem ein Federelement aufweisen, welches die zentrische Anordnung der Heizplatte 2 im Rahmen 7 gewährleistet.

### Bezugszeichenliste

- 1: Heizelement
- 2: Heizplatte
- 3: Heizdraht
- 4: Heizring
- 5: Stirnseite Heizplatte
- 6: Stirnseite Heizring
- 7: Rahmen
- 8: Abdeckung
- 9: Zentrierelement
- 10: Distanzelement
- 11: Vorrichtung
- 12: Heizzone
- 13: Spannvorrichtung
- 14: Axiale Zentrierung
- 15: Isolationsspalt
- 16: Drahtdurchführung

## Patentansprüche

1. Heizelement (1) zur Erzeugung von IR-Wärmestrahlen zum berührungslosen Erwärmen von Kunststoffprofilenden, vorzugsweise zum stirnseitigen Verschweissen von in einer Vorrichtung eingespannten Rohren oder Fittings, beinhaltend, eine zumindest teilweise aus einem leitfähigen Material hergestellte, zwei heizbare Stirnseiten (5) aufweisende Heizplatte (2), einen Heizdraht (3) zum Erzeugen der Wärmestrahlen, wobei der Heizdraht (3) an den Stirnseiten (5) der Heizplatte (2) angeordnet ist, **dadurch gekennzeichnet, dass** die Heizplatte (2) mehrere voneinander radial beabstandete Heizzonen (12) aufweist.

2. Heizelement (1) nach Anspruch 1, **dadurch gekennzeichnet, dass** die Heizzonen (12) selektiv beheizbar sind.

3. Heizelement (1) nach einem der Ansprüche 1 oder 2, **dadurch gekennzeichnet, dass** jede Heizzone (12) gegenüber der nächstliegend angeordneten Heizzone (12) isoliert ist.

4. Heizelement (1) nach einem der Ansprüche 1 bis 3, **dadurch gekennzeichnet, dass** das Heizelement (1) mindestens zwei Heizzonen (12) aufweist.

5. Heizelement (1) nach einem der Ansprüche 1 bis 4, **dadurch gekennzeichnet, dass** die Heizplatte (2) durch mehrere voneinander radial beabstandete Heizringe (4) gebildet ist.

6. Heizelement (1) nach Anspruch 5, **dadurch gekennzeichnet, dass** zwischen den Heizringen (4) ein Isolationsspalt (15) angeordnet ist, der die Wärmeübertragung unter den einzelnen Heizringen (4) reduziert.

7. Heizelement (1) nach Anspruch 6, **dadurch gekennzeichnet, dass** der Heizdraht (3) an den Stirnseiten (6) der Heizringe (4) spiralförmig um das Zentrum der Heizplatte (2) angeordnet ist.

8. Heizelement (1) nach einem der Ansprüche 6 oder 7, **dadurch gekennzeichnet, dass** zur radialen Beabstandung zwischen den Heizringen (4) ein Distanzelement (10) angeordnet ist.

9. Heizelement (1) nach Anspruch 8, **dadurch gekennzeichnet, dass** das Distanzelement (10) aus einem isolierenden Werkstoff besteht.

10. Heizelement (1) nach einem der Ansprüche 8 oder 9, **dadurch gekennzeichnet, dass** das Distanzelement (10) als Halbschale ausgebildet ist.

11. Heizelement (1) nach einem der Ansprüche 1 bis 10, **dadurch gekennzeichnet, dass** die Heizplatte (2) von einem Rahmen (7) umfasst ist.

12. Heizelement (1) nach einem der Ansprüche 8 bis 11, **dadurch gekennzeichnet, dass** Heizringe (4) und die Distanzelemente (10) konzentrisch zueinander angeordnet sind.

13. Heizelement (1) nach einem der Ansprüche 6 bis 12, **dadurch gekennzeichnet, dass** an den Stirnseiten (6) der Heizringe Abdeckungen (8) angeordnet sind.

14. Heizelement (1) nach einem der Ansprüche 8 bis 13, **dadurch gekennzeichnet, dass** die Heizringe (4) und die Distanzelemente (10) durch Zusammenspannen in einem Rahmen (7) fixiert sind.

15. Heizelement (1) nach einem der Ansprüche 1 bis 15, **dadurch gekennzeichnet, dass** mittels Zentrierelemente (9) die Heizplatte (2) in einem Rahmen (7) fixiert und zentriert wird.
